# EUROPÄISCHE PATENTSCHRIFT

(11) **EP 0 752 341 B1**
(45) Veröffentlichungstag und Bekanntmachung des Hinweises auf die Patenterteilung: **21.04.1999**
(21) Anmeldenummer: 96109569.2
(22) Anmeldetag: 13.06.1996
(51) Int. Cl.: B60P 7/08, B60P 7/13

(54) **Fahrzeug**
Vehicle
Véhicule

(30) Priorität: 06.07.1995 DE 29510937 U
(43) Veröffentlichungstag der Anmeldung: 08.01.1997
(73) Patentinhaber: Schier GmbH & Co. KG, D-33161 Hövelhof (DE)
(72) Erfinder: Schier, Dietmar Dipl.Ing., 33161 Hövelhof (DE); Schier, Manfred Dipl.Ing., 33161 Hövelhof (DE)
(74) Vertreter: Stracke, Alexander, Dipl.-Ing.

(56) Entgegenhaltungen:
- DE-A- 4 303 350
- DE-U- 1 830 785
- GB-A- 1 200 682

## Beschreibung

Die vorliegende Erfindung betrifft ein Fahrzeug mit einem Aufbau, der mindestens einen Boden aufweist, der an der Oberseite mit mehreren parallel und im Abstand zueinander sowie in Fahrzeuglängsrichtung verlaufenden Fahrspuren für die Laufrollen von in Reihen abgestellten Transportmitteln versehen ist. Das in Rede stehende Fahrzeug kann ein Lastkraftwagen oder ein Anhänger sein. Derartige Fahrzeuge werden auch aufgrund des Aufbaues als Koffertahrzeuge oder Pritschenfahrzeuge bezeichnet. Die Transportmittel sind üblicherweise Rollwagen, die so ausgelegt sind, daß drei Reihen nebeneinander abgestellt werden können. Da die Höhe des Aufbaues im Normalfall deutlich größer ist als die Höhe eines Transportmittels wird der Fahrzeugaufbau mit einem höhenverstellbaren Hubboden ausgerüstet, so daß wenigstens zwei Beladeebenen entstehen. Zur Führung der Transportmittel ist der bzw. sind die Böden an der oberen, d. h. den Fahrzeugrädern abgewandten Seiten im Normalfall mit zwei, vier oder sechs Fahrspuren ausgerüstet. Die einzelnen Fahrspuren sind Rinnen oder Nuten, deren Breiten größer sind als die Tiefen oder umgekehrt. Für jede Reihe von Transportmitteln werden zwei Fahrspuren benötigt, so daß jeder Boden in der Regel mit sechs Fahrspuren ausgerüstet ist.

Die abgestellten Transportmittel müssen gegen ein Verfahren in und entgegen der Vorwärtsfahrtrichtung des Fahrzeuges gesichert werden. Dies erfolgt üblicherweise durch eine Bremse am Transportmittel oder mit Hilfsmitteln an oder im Aufbau, wie z. B. Klemmstangen, Zurrleisten mit Zurriemen und/oder Zurrösen. Für den Fahrer des Fahrzeuges ist das beim Be- und Entladen äußerst zeitaufwendig, da er die Bremse in Bremsstellung bringen muß bzw. lösen muß. Naturgemäß wird das Betätigen der Bremse beim Beladen auch vergessen.

Der vorliegenden Erfindung liegt die Aufgabe zugrunde, ein Fahrzeug der eingangs näher beschriebenen Art so zu gestalten, daß die Sicherung der Transportmittel gegen ein selbsttätiges Verfahren in und entgegen der Vorwärtsfahrtrichtung des Fahrzeugs in einfacher Weise möglich ist und daß außerdem die Sicherheit erhöht wird.

Die gestellte Aufgabe wird gelöst, indem zumindest eine von zwei Fahrspuren für eine Reihe von Transportmitteln mit einer schräg-parallel zur Längsrichtung horizontal verfahrbaren Verriegelungsschiene ausgerüstet ist.

Durch diese konstruktiv recht einfache Lösung ist es nunmehr möglich, alle in einer Reihe angeordneten Transportmittel gegen ein Verfahren zu sichern, da es nunmehr möglich ist, daß die Verriegelungsschiene gegen das Transportmittel gefahren wird, so daß dieses sinngemäß festgeklemmt wird. In vorteilhafter Weise wird die Verriegelungsschiene gegen die Laufrollen der Transportmittel gedrückt. Bei einer entsprechenden Auslegung können alle Verriegelungsschienen gleichzeitig verfahren werden, so daß sämtliche Transportmittel gesichert bzw. verfahrbar sind.

In weiterer Ausgestaltung ist vorgesehen, daß jeder Fahrspur eine Sicherungsschiene zugeordnet ist. Dadurch wird nicht nur die Sicherheit weiter erhöht, sondern es wird eine einseitige Krafteinleitung vermieden, um Beschädigungen zu vermeiden. Durch diese Gestaltung werden alle Laufrollen der Transportmittel blockiert. Dabei ist es zweckmäßig, daß die Verriegelungsschienen zwischen den beiden Fahrspuren für eine Reihe von Transportmitteln liegen. Die Verriegelungsschienen liegen dann an den einander zugewandten Seiten an den Laufrollen an. Dies ist auch konstruktiv besonders günstig, da der Abstand zur benachbarten Fahrspur für die danebenliegende Reihe geringer ist als der Abstand der beiden Fahrspuren für eine Reihe von Transportmitteln. Damit für den Fahrer eines Fahrzeugs die Handhabung äußerst einfach ist, ist vorgesehen, daß jeder Verriegelungsschiene ein Antrieb zugeordnet ist. Durch eine entsprechende Steuerung können dann durch Betätigung beispielsweise eines Drucktasters alle Verriegelungsschienen in die verriegelnde Stellung oder in die Außerbetriebsstellung verfahren werden. Eine besonders einfache betriebssichere Lösung wird dabei erreicht, wenn der Antrieb für eine Verriegelungsschiene aus mehreren über deren Länge verteilte Kolbenzylindereinheiten besteht.

Damit die Wirkung der Verriegelungsschienen erhöht wird, ist vorgesehen, daß die Kontaktflächen profiliert sind. Eine derartige Profilierung kann beispielsweise wellenförmig sein. Dadurch wird verhindert, daß beispielsweise beim Bremsen des Fahrzeuges eine Verschiebung der Transportmittel stattfindet, indem sie an den Kontaktflächen gleiten. Sofern jede Fahrspur mit einer Verriegelungsschiene ausgerüstet ist, liegen die profilierten Kontaktflächen an den einander abgewandten Seiten der beiden Verriegelungsschienen. Damit die Verriegelungsschienen sich nicht verecken oder verkanten, ist vorgesehen, daß sie längs einer festen Führung verfahrbar sind. Diese feste Führung wird konstruktiv besonders einfach, wenn sie aus dem Abstand zueinander angeordneten Langlöchern und darin eingreifenden Bolzen besteht. Dabei ist es dann besonders zweckmäßig, wenn die Langlöcher in den Verriegelungsschienen angeordnet sind. Dabei ist es dann zweckmäßig, wenn die Langlöcher schräg zur Längsachse der Verriegelungsschiene stehen, wobei die Langlöcher der beiden Verriegelungsschienen für eine Reihe von Transportmitteln bzw. einem Paar, in Vorwärtsfahrtrichtung des Fahrzeugs gesehen, divergierend zueinander verlaufen, da dann beispielsweise beim starken Abbremsen des Fahrzeugs die beiden Verriegelungsschienen noch weiter auseinandergedrückt würden, wenn eine Mitnahme durch ein sich nach vorn bewegendes Transportmittel erfolgt. Zweckmäßigerweise stehen dann auch die den Antrieb bildenden Kolbenzylindereinheiten entsprechend schräg, da ansonsten größere Kräfte zum Verfahren der Verriegelungsschienen notwendig wären.

Anhand der beiliegenden Zeichnungen wird die Erfindung noch näher erläutert. Es zeigen:
- Figur 1: ein erfindungsgemäßes Fahrzeug ohne Heckklappe mit Blick in den Innenraum des Aufbaus,
- Figur 2: eine Teildraufsicht des Bodens des erfindungsgemäßen Fahrzeugs und
- Figur 3: einen der Figur 2 entsprechenden Querschnitt.

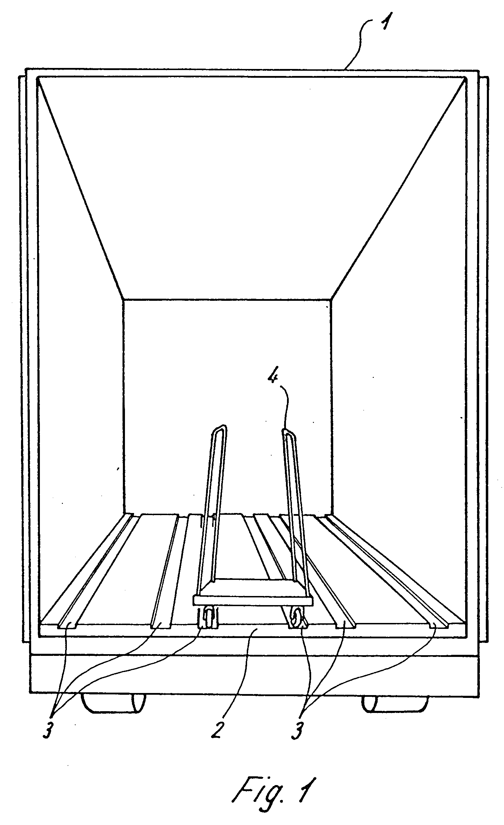

Das in der Figur 1 dargestellte Fahrzeug hat einen geschlossenen Aufbau 1, der durch eine nicht dargestellte Heckklappe oder durch zwei schwenkbare Türflügel verschließbar ist. Der Boden 2 des Fahrzeuges ist mit sechs parallel und im Abstand zueinander sowie in Längsrichtung des Fahrzeugs verlaufenden Fahrspuren 3 versehen. Die Fahrspuren sind durch Rinnen oder Nuten gebildet. Zwei in Querrichtung aufeinanderfolgende Fahrspuren 3 sind für die Laufrollen von Rollwagen 4 vorgesehen, wie andeutungsweise dargestellt ist. Über die gesamte Länge des Fahrzeugs werden die Rollwagen 4 hintereinander gestellt, so daß im dargestellten Ausführungsbeispiel mittels des Fahrzeugs drei Reihen transportiert werden können.

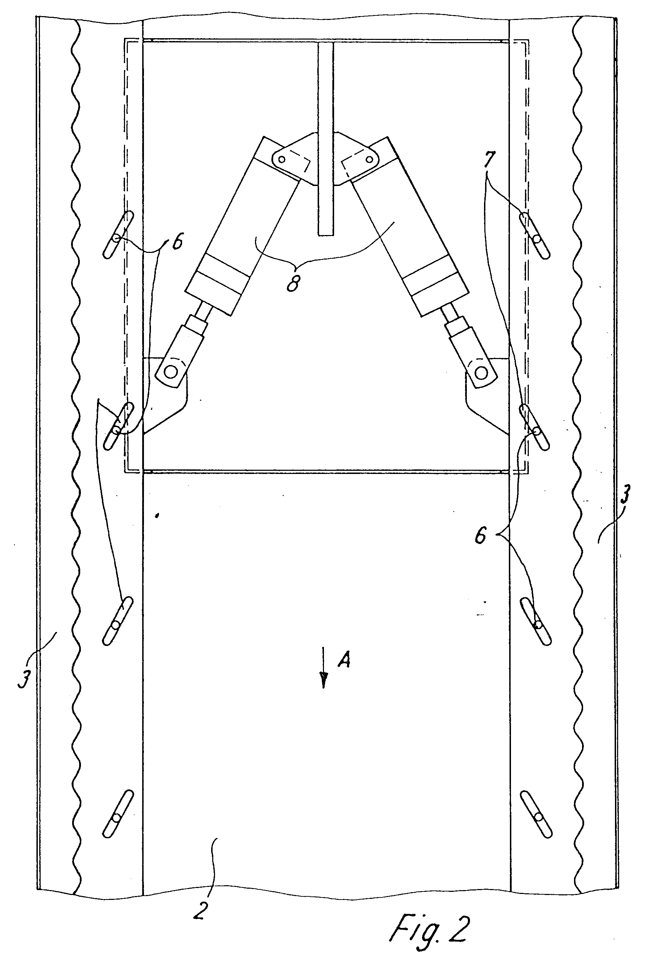

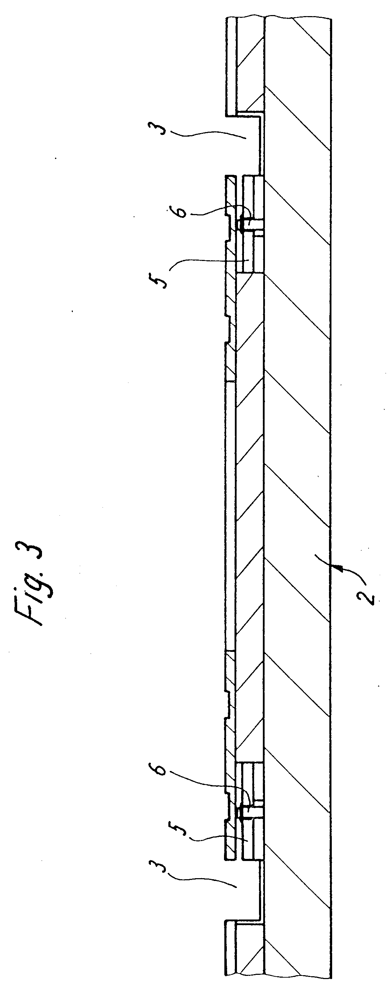

In der Figur 2 ist die Vorwärtsfahrtrichtung des Fahrzeugs durch den Pfeil A gekennzeichnet. Wie die Figuren 2 und 3 zeigen, ist im dargestellten Ausführungsbeispiel jeder Fahrspur 3 eine Verriegelungsschiene 5 zugeordnet. Diese Verriegelungsschienen 5 erstrecken sich im wesentlichen über die gesamte Länge des Aufbaues 1 des Fahrzeugs. Die Verriegelungsschienen 5 liegen an den inneren einander zugewandten Seiten von zwei Fahrspuren 3 für eine Reihe von Rollwagen 4. Die Querschnitte der Verriegelungsschienen 5 entsprechen einem Flachstahl. An den einander abgewandten, die Räder der Rollwagen 4 kontaktierenden Seiten sind die Verriegelungsschienen 5 wellenförmig profiliert, wodurch die Wirkung wesentlich erhöht wird.

In den Boden 2 sind in einem geringen Abstand zu jeder Fahrspur 3 senkrecht stehende Bolzen 6 fest eingesetzt. Die Verriegelungsschienen 5 sind mit lagegerecht dazu angeordneten Langlöchern 7 versehen, die im Zusammenwirken mit den Bolzen 6 eine Führung für die Verriegelungsschienen 5 bilden. Die Langlöcher 7 verlaufen schräg zu den Längsrändern der Verriegelungsschienen 5 und zwar so, daß die nebeneinander stehenden Langlöcher 7 für eine Reihe von Rollwagen 4 in Vorwärtsfahrtrichtung des Fahrzeugs divergierend verlaufen. Dadurch werden die Verriegelungsschienen 5 fester gegen die Laufräder der Rollwagen 4 gedrückt, wenn beispielsweise das Fahrzeug extrem stark abgebremst wird und es dadurch passieren könnte, daß die Rollwagen ein klein wenig in Fahrtrichtung verschieben. Jeder Verriegelungsschiene 5 ist ein steuerbarer Antrieb in Form eines Linearantriebes zugeordnet. Im dargestellten Ausführungsbeispiel bestehen diese Antriebe aus Kolbenzylindereinheiten 8, deren Kolbenstangen an den einander zugewandten Seiten von zwei Verriegelungsschienen 5 für eine Reihe von Rollwagen 4 angelenkt sind. Die Kolbenzylindereinheiten 8 stehen in etwa entsprechend der Schrägstellung der Langlöcher 7 ebenfalls schräg zu den Längskanten der Verriegelungsschienen 5. Die Kolbenzylindereinheiten 8 sind so montiert, daß sie gegenüber der oberen Fläche des Bodens 2 nicht vorstehen. Die Kolbenzylindereinheiten 8 sind durch eine nicht dargestellten Steuerung steuerbar.

## Patentansprüche

1. Fahrzeug mit einem Aufbau, der mindestens einen Boden aufweist, der an der Oberseite mit mehreren parallel und im Abstand zueinander sowie in Fahrzeuglängsrichtung verlaufenden Fahrspuren für die Laufrollen von in Reihen abstellbaren Transportmitteln versehen ist, **dadurch gekennzeichnet, daß** zumindest eine von zwei Fahrspuren (3) für eine Reihe von Transportmitteln (4) mit einer schräg-parallel zur Längsrichtung und horizontal verfahrbaren Verriegelungsschiene (5) ausgerüstet ist.

2. Fahrzeug nach Anspruch 1, **dadurch gekennzeichnet, daß** jeder Fahrspur (3) eine Verriegelungsschiene (5) zugeordnet ist.

3. Fahrzeug nach Anspruch 2, **dadurch gekennzeichnet, daß** die Verriegelungsschienen (5) zwischen den beiden Fahrspuren (3) für eine Reihe von Transportmitteln (4) liegen.

4. Fahrzeug nach Anspruch 1, **dadurch gekennzeichnet, daß** jeder Verriegelungsschiene (5) ein Antrieb zugeordnet ist.

5. Fahrzeug nach Anspruch 4, **dadurch gekennzeichnet, daß** der Antrieb aus mehreren über die Länge der Verriegelungsschiene (5) verteilten Kolbenzylindereinheiten (8) besteht.

6. Fahrzeug nach Anspruch 1, **dadurch gekennzeichnet, daß** die Kontaktflächen der Verriegelungsschienen (5) profiliert, vorzugsweise wellenförmig sind.

7. Fahrzeug nach Anspruch 1, **dadurch gekennzeichnet, daß** die Verriegelungsschienen (5) längs einer festen Führungsbahn verfahrbar sind.

8. Fahrzeug nach Anspruch 7, **dadurch gekennzeichnet, daß** jede Führung aus im Abstand zueinander angeordneten Langlöchern (7) und darin eingreifenden Belzen (6) besteht.

9. Fahrzeug nach Anspruch 8, **dadurch gekennzeichnet, daß** die Langlöcher (7) in den Verriegelungsschienen (5) vorgesehen sind, und daß die Bolzen (6) fest in den Boden (2) des Aufbaus (1) eingesetzt sind.

10. Fahrzeug nach Anspruch 9, **dadurch gekennzeichnet, daß** die Langlöcher (7) schräg zu den Längskanten der Verriegelungsschienen (5) stehen, wobei die nebeneinander angeordneten Langlöcher (7) von zwei Verriegelungsschienen (5) für eine Reihe von Transportmitteln (4), in Vorwärtsfahrtrichtung des Fahrzeugs gesehen, divergierend zueinander stehen.

## Claims

1. A vehicle having a body which has at least a floor which is provided at the top side with a plurality of travel tracks extending parallel and at a spacing relative to each other and in the longitudinal direction of the vehicle, for the runner wheels of transport means which can be parked in rows, characterised in that at least one of two travel tracks (3) for a row of transport means (4) is provided with a locking bar (5) which is displaceable horizontally and inclinedly-parallel with respect to the longitudinal direction.

2. A vehicle according to claim 1 characterised in that a locking bar (5) is associated with each travel track (3).

3. A vehicle according to claim 2 characterised in that the locking bars (5) lie between the two travel tracks (3) for a row of transport means (4).

4. A vehicle according to claim 1 characterised in that a drive is associated with each locking bar (5).

5. A vehicle according to claim 4 characterised in that the drive comprises a plurality of piston-cylinder units (8) distributed over the length of the locking bar (5).

6. A vehicle according to claim 1 characterised in that the contact surfaces of the locking bars (5) are profiled and are preferably of a corrugated configuration.

7. A vehicle according to claim 1 characterised in that the locking bars (5) are displaceable along a fixed guide path.

8. A vehicle according to claim 7 characterised in that each guide comprises slots (7) arranged at spacings relative to each other and pins (6) engaging into the slots.

9. A vehicle according to claim 8 characterised in that the slots (7) are provided in the locking bars (5) and that the pins (6) are fixedly fitted into the floor (2) of the body (1).

10. A vehicle according to claim 9 characterised in that the slots (7) are disposed inclinedly with respect to the longitudinal edges of the locking bars (5), wherein the mutually juxtaposed slots (7) of two locking bars (5) for a row of transport means (7) are in divergent relationship with each other, as viewed in the direction of forward travel of the vehicle.

## Revendications

1. Véhicule présentant une structure comportant au moins un plancher équipé, sur sa face supérieure, de plusieurs pistes de roulement parallèles, écartées, et s'étendant dans la direction longitudinale du véhicule, destinées aux roulettes de moyens de transport que l'on peut stocker en files, caractérisé en ce qu'au moins une piste de roulement (3) sur deux, destinée à une file de moyens de transport (4), est équipée d'un rail à verrouillage (5) oblique-parallèle à la direction longitudinale et déplaçable horizontalement.

2. Véhicule selon la revendication 1, caractérisé en ce qu'à chaque piste de roulement (3) est associé un rail à verrouillage (5).

3. Véhicule selon la revendication 2, caractérisé en ce que les rails à verrouillage (5) s'étendent entre les deux pistes de roulement (3) destinées à une file de moyens de transport (4).

4. Véhicule selon la revendication 1, caractérisé en ce qu'à chaque rail à verrouillage (5) est associé un entraînement.

5. Véhicule selon la revendication 4, caractérisé en ce que l'entraînement est constitué de plusieurs unités piston-cylindre (8) réparties sur la longueur du rail à verrouillage (5).

6. Véhicule selon la revendication 1, caractérisé en ce que les surfaces de contact des rails à verrouillage (5) sont profilées et, de préférence, ondulées.

7. Véhicule selon la revendication 1, caractérisé en ce que les rails à verrouillage (5) sont déplaçables le long d'une voie de guidage fixe.

8. Véhicule selon la revendication 7, caractérisé en ce que chaque voie de guidage est constituée de perçages longitudinaux (7) écartés et de goujons (6) qui y pénètrent.

9. Véhicule selon la revendication 8, caractérisé en ce que les perçages longitudinaux (7) sont prévus dans les rails à verrouillage (5) et en ce que les goujons (6) sont insérés fixement dans le plancher (2) de la structure (1).

10. Véhicule selon la revendication 9, caractérisé en ce que les perçages longitudinaux (7) sont obliques par rapport aux arêtes longitudinales des rails à verrouillage (5), les perçages longitudinaux (7) adjacents de deux rails à verrouillage (5) destinés à une file de moyens de transport (4) étant placés de façon divergente, vu dans le sens de déplacement du véhicule vers l'avant.
